# EUROPÄISCHE PATENTANMELDUNG

(11) **EP 2 913 336 A1**
(43) Veröffentlichungstag der Anmeldung: **02.09.2015**
(21) Anmeldenummer: 14000715.4
(22) Anmeldetag: 28.02.2014
(51) Int. Cl.: C07F 15/00, A61K 31/282

(54) **Verfahren zur Herstellung von Carboplatin**

(71) Anmelder: Umicore AG & Co. KG, 63457 Hanau-Wolfgang (DE)
(72) Erfinder: Kleinwaechter, Ingo, 63457 Hanau (DE)

(57) **Zusammenfassung**

Das vorliegende Verfahren wird bereit gestellt um für pharmazeutische Zwecke geeignetes Carboplatin herzustellen, welches einen niedrigen Silbergehalt aufweist.

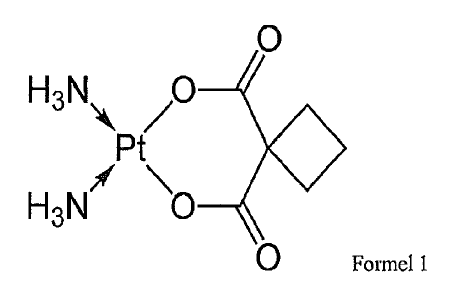

## Beschreibung

Carboplatin (Diamminplatin(II)-cyclobutan-1,1-dicarboxylat) ist ein wichtiges Chemotherapeutikum für die Therapie verschiedener Krebsarten.

Die Struktur ist in Formel 1 dargestellt.

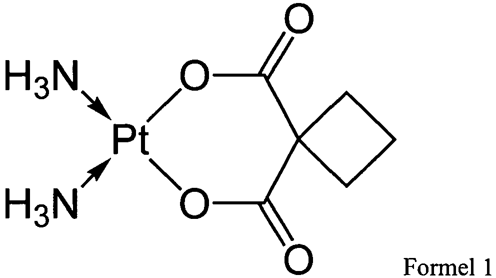

Bei der Herstellung von Carboplatin für pharmazeutische Zwecke ist im Allgemeinen eine hohe Reinheit erforderlich. Insbesondere wird Carboplatin mit einem Silbergehalt von 2 ppm oder weniger angestrebt.

Das vorliegende Verfahren stellt ein einfaches Verfahren bereit, um für pharmazeutische Zwecke geeignetes Carboplatin herzustellen, welches einen niedrigen Silbergehalt ermöglicht.

Zur Durchführung des Verfahrens wird zunächst ein cis-diiodo Platin(II)-Komplex bereitgestellt. Hierbei kann (SP-4-2)-Diammindiiodidoplatin(II) eingesetzt werden. Die Struktur dieser Verbindung ist in Formel 2 dargestellt.

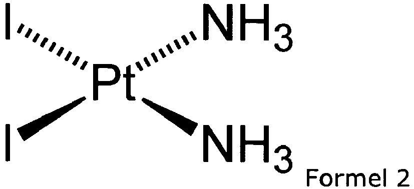

Die Verbindung ist literaturbekannt und kann durch Hinzufügen einer wäßrigen Lösung von Kaliumtetrachloroplatinat K₂PtCl₄ zu einer Kaliumiodidlösung für etwa 45 bis 60 Minuten und anschließendem Hinzufügen von wäßriger Ammoniaklösung und drei-bis vierstündiger Reaktionszeit erhalten werden. Der erhaltene gelbe Niederschlag ist das Reaktionsprodukt und wird abfiltriert und mit Wasser, Ethanol und Ether gewaschen und getrocknet.

Diese Verbindung wird vom Diiodokomplex in einen Diaquokomplex überführt, was durch Zugabe des cis-diiodo Platin(II)-Komplexes zu einer wäßrigen Silbernitratlösung bewirkt wird. Der molare Überschuß von Silbernitrat gegenüber dem cis-diiodo Platin(II)-Komplex beträgt mindestens 5%, d.H. pro mol des cis-diiodo Platin(II)-Komplexes werden 1,05 mol Silbernitrat eingesetzt. Mit einem Überschuß von 5% bis 20%, insbesondere 9% bis 13 % können ebenfalls gute Ergebnisse erzielt werden.

Die Menge des eingesetzten Silbernitrats in Gramm kann durch eine Faustformel berechnet werden, indem man das Trockengewicht des eingesetzten cis-diiodo Platin(II)-Komplexes in Gramm mit einem Faktor von 0,55 bis 0,9 oder 0,7 bis 0,8 multipliziert. Je nach den individuellen Gegebenheiten wie Ansatzgröße oder Anlagenauslegung kann der Faktor durch einige Vorversuche optimiert werden.

Die erhaltene Suspension wir auf eine Temperatur von weniger als 100°C erhitzt und reagiert unter Rühren für 5 bis 15 Stunden, insbesondere 5 bis 7 Stunden. Die Reaktionstemperatur liegt im Allgemeinen bei etwa 30°C bis etwa 90°C, gute Ergebnisse lassen sich bei etwa 50°C bis etwa 80°C oder 60°C bis etwa 75°C erzielen.

Nach dem Abkühlen des Reaktionsgemischs wird das überschüssige Silber durch Zugabe eines Alkali- oder Erdalkalihalogenids gefällt. Das Alkali- oder Erdalkalihalogenid kann ausgewählt sein aus der Gruppe bestehend aus den Chloriden, Bromiden, Iodiden oder Fluoriden von Natrium, Kalium, Lithium, Rubidium, Cäsium, Beryllium, Magnesium, Calcium, Strontium, Barium und deren Mischungen. Es ist empfehlenswert, gut wasserlösliche Verbindungen auszuwählen, da auf diese Weise möglichst viel Alkali- oder Erdalkalihalogenid in einem möglichst niedrigen Wasservolumen gelöst werden kann. Dies sind zum Beispiel Chloride oder Bromide des Natriums oder Kaliums, insbesondere Natriumchlorid oder Kaliumchlorid.

Wird Kaliumchlorid zugegeben, so kann die Menge des zuzugebenden Kaliumchlorids durch eine Faustformel berechnet werden, indem man das Trockengewicht des eingesetzten cis-diiodo Platin(II)-Komplexes in Gramm mit einem Faktor von 0,03 bis 0,1 oder 0,04 bis 0,05 multipliziert. Je nach den individuellen Gegebenheiten wie Ansatzgröße oder Anlagenauslegung kann der Faktor durch einige Vorversuche optimiert werden.

Das Alkali- oder Erdalkalihalogenid wird in einem Minimum an Wasser gelöst und unter Rühren dem abgekühlten Reaktionsgemisch zugegeben. Es kann dann bis zu etwa einer Stunde nachgerührt werden, wobei etwa eine halbe Stunde bereits ausreichend ist. Anschließend wird dem gebildeten Niederschlag die Sedimentation gestattet, was beispielsweise durch Stehenlassen für einen Zeitraum von 4 bis 24 Stunden, oder 5 bis 15 Stunden oder 6 bis 12 Stunden bewirkt werden kann. Eine Sedimentation über Nacht ist also in den meisten Fällen ausreichend. Eine beschleunigte Sedimentation kann natürlich ebenfalls durch Zentrifugieren bewirkt werden.

Anschließend wird über Aktivkohle abfiltriert und mit Wasser nachgewaschen, um unlösliche Silberhalogenide abzutrennen. Ist das erhaltene Filtrat nicht klar, so kann die Filtration auch ein-oder mehrfach wiederholt werden.

Optional können weitere Schritte zum Entfernen von Silber aus der Lösung durchgeführt werden.

Optional kann das Filtrat und die Waschwässer erneut mit einem Alkali- oder Erdalkalihalogenid, Aktivkohle oder deren Kombination versetzt und für im Allgemeinen ein-bis zwei Stunden gerührt und von 2 Stunden bis 2 Tagen sedimentiert, über Aktivkohle abfiltriert und mit Wasser nachgewaschen werden. Diese Vorgehensweise wird optional ausgeführt und kann ein- oder mehrmals wiederholt werden.

Da das Silber bereits zum größten Teil abgetrennt ist, wird das Alkali- oder Erdalkalihalogenid in Mengen von einem Tausendstel Gewichtsprozent bis drei Gewichtsprozent oder einem halben Gewichtsprozent bis zwei Gewichtsprozent der Wassermenge eingesetzt, in welcher das zur Herstellung des Aquokomplexes eingesetzte Silbernitrat gelöst wurde.

Das gewünschte Produkt findet sich im Filtrat und den Waschwässern, welche vereinigt werden. Gute Ergebnisse lassen sich mit Durchführung dieses optionalen Schritts erreichen.

Eine weitere Verbesserung ist möglich, indem eine Bestimmung des Silbergehaltes mit folgender Zugabe einer äquimolaren Menge an Alkali- oder Erdalkalihalogenid durchgeführt wird.

Zunächst wird der Silbergehalt der Lösung bestimmt. Da der Silbergehalt der Lösung sehr niedrig ist sind herkömmliche Verfahren wie Titration ungeeignet. Die Bestimmung wird daher mit ICP-OES (inductively coupled plasma optical emission spectrometry, also optische Emissionsspektrometrie mittels induktiv gekoppelten Plasmas) oder ICP-MS (inductively coupled mass spectrometry, also Massenspektrometrie mittels induktiv gekoppelten Plasmas) durchgeführt.

Der Silbergehalt der Lösungen liegt üblicherweise zwischen etwa 0,5 ppm oder etwa 3 ppm.

Liegt der bestimmte Silbergehalt bei weniger als etwa 0,5 ppm bis 0,8 ppm, so ist die Lösung des erhaltenen Aquokomplexes rein genug um mit der Reaktion mit Cyclobutandicarbonsäure fortzufahren.

Liegt der Silbergehalt bei mehr als etwa 0,8 ppm oder höher, so wird die Menge des zu verwendenden Alkali- oder Erdalkalihalogenids berechnet. Hierzu wird unter Berücksichtigung des Löslichkeitsproduktes von Silberhalogenid, insbesondere Silberchlorid, die Restlöslichkeit durch Zugabe von Halogenid, vorteilhaft Chlorid, insbesondere von Kaliumchlorid, so weit gesenkt, daß der Silbergehalt theoretisch unterhalb der gewünschten Menge liegt.

Die berechnete Menge an Kaliumchlorid wird in möglichst wenig Wasser gelöst, zur Lösung zugegeben, für ein bis fünf Stunden oder zwei bis vier Stunden gerührt und über Aktivkohle abfiltriert. Der Rückstand wird mit Wasser nachgewaschen.

Zu der auf diese Weise weiter gereinigten Lösung des Aquokomplexes wird 1,1-Cyclobutandicarbonsäure zugefügt.

Hierzu wird 1,1-Cyclobutandicarbonsäure in Wasser gelöst. Im Allgemeinen können Mengen 25 % bis 40% oder 30% bis 35 % 1,1-Cyclobutandicarbonsäure, bezogen auf die Wassermenge, in Wasser gelöst werden. Dies entspricht beispielsweise 30g 1,1-Cyclobutandicarbonsäure auf 100 ml Wasser. Die absolute Menge an 1,1-Cyclobutandicarbonsäure bemißt sich nach der Menge des ursprünglich zur Herstellung des cis-diiodo Platin(II)-Komplex eingesetzten Platinsalzes bzw. der entsprechenden Platinmenge. Die 1,1-Cyclobutandicarbonsäure kann mit dem ursprünglich zur Herstellung des cis-diiodo Platin(II)-Komplexes eingesetzten Platinsalz bzw. der entsprechenden Platinmenge äquimolar eingesetzt werden, vorteilhaft ist jedoch ein Überschuß von 0,5 % bis 2 %. Wird beispielsweise eine Menge von 102 mmol Kaliumtetrachloroplatinat zur Herstellung des cis-diiodo Platin(II)-Komplexes eingesetzt, so kann zum Beispiel eine Menge von 103,1 mmol 1,1-Cyclobutandicarbonsäure verwendet werden.

Anschließend wird der pH-Wert der wäßrigen Cyclobutandicarbonsäurelösung mit wäßriger Ammoniaklösung auf etwa 6,5 bis etwa 7 eingestellt.

Diese Cyclobutandicarbonsäurelösung, die auf den beschriebenen pH-Wert eingestellt ist, wird dann zu der Lösung des Aquokomplexes gegeben. Ein Niederschlag darf nicht sofort auftreten, ansonsten wurde der pH-Wert nicht korrekt eingestellt. Danach wird bei einer Temperatur von etwa 15°C bis 40°C oder einer Temperatur von etwa 20°C bis 30°C für 4 bis 24 Stunden, oder 8 bis 16 Stunden gerührt. Ein Rühren über Nacht ist daher meist ausreichend. Anschließend wird über Aktivkohle abfiltriert. Das Filtrat enthält das Endprodukt Carboplatin.

Die so erhaltene Lösung von Carboplatin kann nun optional weiteren Schritten zur Entfernung von Restsilber unterworfen werden.

Optional kann die Lösung von Carboplatin erneut mit einem Alkali- oder Erdalkalihalogenid, Aktivkohle oder deren Kombination versetzt und für im Allgemeinen ein-bis zwei Stunden gerührt und von 1 Stunde bis 1 Tag sedimentiert, über Aktivkohle abfiltriert werden. Diese Vorgehensweise wird optional ausgeführt und kann ein- oder mehrmals wiederholt werden.

Da das Silber bereits zum größten Teil abgetrennt ist, wird das Alkali- oder Erdalkalihalogenid in Mengen von einem Tausendstel Gewichtsprozent bis drei Gewichtsprozent oder einem halben Gewichtsprozent bis zwei Gewichtsprozent der Wassermenge eingesetzt, in welcher das zur Herstellung des Aquokomplexes eingesetzte Silbernitrat gelöst wurde.

Das gewünschte Produkt Carboplatin findet sich im Filtrat. Gute Ergebnisse lassen sich mit Durchführung dieses optionalen Schritts erreichen.

Eine weitere Verbesserung ist möglich, indem eine Bestimmung des Silbergehaltes mit folgender Zugabe einer äquimolaren Menge an Alkali- oder Erdalkalihalogenid durchgeführt wird.

Zunächst wird der Silbergehalt der Lösung bestimmt. Da der Silbergehalt der Lösung sehr niedrig ist sind herkömmliche Verfahren wie Titration ungeeignet. Die Bestimmung wird daher mit ICP-OES (inductively coupled plasma optical emission spectrometry, also optische Emissionsspektrometrie mittels induktiv gekoppelten Plasmas) oder ICP-MS (inductively coupled mass spectrometry, also Massenspektrometrie mittels induktiv gekoppelten Plasmas) durchgeführt.

Der Silbergehalt der Lösungen liegt üblicherweise zwischen etwa 0,5 ppm oder etwa 3 ppm. Liegt der bestimmte Silbergehalt bei weniger als etwa 0,5 ppm bis 0,8 ppm, so ist die Lösung von Carboplatin ausreichend rein und kann weiter verarbeitet werden.

Liegt der Silbergehalt bei mehr als etwa 0,8 ppm oder höher, so wird die Menge des zu verwendenden Alkali- oder Erdalkalihalogenids berechnet. Hierzu wird unter Berücksichtigung des Löslichkeitsproduktes von Silberhalogenid, insbesondere Silberchlorid, die Restlöslichkeit durch Zugabe von Halogenid, vorteilhaft Chlorid, insbesondere von Kaliumchlorid, so weit gesenkt, daß der Silbergehalt theoretisch unterhalb der gewünschten Menge liegt.

Die berechnete Menge an Kaliumchlorid wird in möglichst wenig Wasser gelöst, zur Lösung zugegeben, für 30 bis 120 Minuten oder 45 bis 90 Minuten gerührt und über Aktivkohle abfiltriert. Der Rückstand wird mit Wasser nachgewaschen.

Alternativ zum Filtrieren über Aktivkohle kann die Lösung von Carboplatin während einer der oben genannten Schritte zur Entfernung von Restsilber auch mit Aktivkohle versetzt, für ein bis zwei Stunden gerührt und dann abfiltriert werden.

Für die Filtration empfiehlt sich hier -wie in allen Filtrationsschritten, die in der vorliegenden Patentanmeldung beschrieben werden- eine Filtration über so genannte Blauband-Filter, welche ein Filterpapier mit besonders kleiner Porengröße sind.

Zum Abschluß ist es empfehlenswert, die Lösung von Carboplatin über einen Membranfilter mit einer Porengröße von 0,2 µm zu filtrieren.

Die Lösung von Carboplatin kann -gegebenenfalls nach den oben beschriebenen weiteren Schritten zur Entfernung von Restsilber- kristallisiert werden. Hierzu wird die Lösung von Carboplatin auf etwa 10% bis etwa 20% des Ausgangsvolumens eingeengt, vorteilhaft im Vakuum bei einer Temperatur von weniger als 50°C. Hierbei fällt das saubere Reaktionsprodukt in Form weißer Kristalle aus.

Dieses wird mit sehr kaltem Wasser (Temperatur von etwa 7°C bis etwa 20°C) und Aceton gewaschen. Als Volumen an Wasser und Aceton haben sich etwa 1% bis 2% des Volumens der Lösung von Carboplatin bewährt. Anschließend kann das kristallisierte Carboplatin für mindestens 5 Stunden im Luftstrom getrocknet werden. Alternativ ist auch eine Trocknung im Vakuum oder durch Liegenlassen des ausgebreiteten Produkts an der Luft möglich. Soll die Trocknung durch erhöhte Temperatur unterstützt werden, so hat sich eine Erwärmung auf eine Temperatur von weniger als 50°C bewährt.

Das getrocknete Produkt weist einen Silbergehalt von 2 ppm oder weniger auf. Daher betrifft die vorliegende Patentanmeldung auch Carboplatin in pharmazeutischer Qualität mit einem Silbergehalt von weniger als 2 ppm, insbesondere erhältlich nach dem Verfahren der vorliegenden Patentanmeldung.

In einem oder mehreren weiteren Verfahrensschritten kann das Carboplatin der vorliegenden Erfindung zu pharmazeutischen Produkten formuliert werden. Hierzu kann die gewünschte Dosierung an Carboplatin in einem nachfolgenden Schritt in steriler isotonischer Kochsalzlösung gelöst werden. Auch die Zugabe weiterer Arzneimittel, welche die Wirkung von Carboplatin unterstützen oder dessen Nebenwirkungen bzw. deren Symptome verringern, kann bei der Formulierung zugegeben werden.

### Beispiel:

Es wurden 42,5 g K₂PtCl₄ in einem 1 I-Kolben mit 300ml Wasser vorgelegt und gerührt, bis das Salz vollständig gelöst war und über einen Blauband-Filter filtriert.

In einem 1 I-Kolben wurden 250 ml 70,2 g Kaliumiodid unter Rühren gelöst und unter Rühren die filtrierte K₂PtCl₄-Lösung zugegeben und für etwa eine Stunde bei einer Temperatur von 42°C nachgerührt. Anschließend wurden 20 ml wäßrige Ammoniaklösung mit einer Konzentration von 25% zugegeben und für 4 Stunden gerührt, wobei sich ein gelber Niederschlag bildete, welcher abfiltriert, zweimal mit etwa 20 ml destilliertem Wasser und Aceton gewaschen und über Nacht bei Raumtemperatur an der Luft getrocknet wurde.

In einem 2 I-Kolben wurden dann 700 ml Wasser vorgelegt und unter Rühren eine Silbernitratmenge zugegeben, welche dem 0,8-fachen des Gewichts des getrockneten, gelben Niederschlags entsprach und aufgelöst. Der getrocknete, gelbe Niederschlag wurde zugegeben, für 7 Stunden bei 80°C gerührt und nach Abkühlen auf Raumtemperatur eine Menge Kaliumchlorid zugegeben, welche dem 0,08-fachen des Gewichts des getrockneten, gelben Niederschlags entsprach und nach etwa einer halben Stunde Rühren für 12 Stunden bei abgeschaltetem Rührer stehen gelassen. Die Suspension wurde nun über einen Blauband-Filter mit Aktivkohle filtriert und zweimal mit etwa 20 ml Wasser nachgewaschen. Das Filtrat wurde unter Rühren in einem Becherglas mit 12,5 mg Kaliumchlorid und 100 mg Aktivkohle versetzt, eine Stunde gerührt und über einen Blauband-Filter mit Aktivkohle filtriert, einmal mit etwa 20 ml Wasser nachgewaschen und die Lösung auf 1,75 l aufgefüllt.

### Optionaler Reinigungsschritt:

Der Silbergehalt der Lösung wurde mit ICP-MS (inductively coupled mass spectrometry, also Massenspektrometrie mittels induktiv gekoppelten Plasmas) bestimmt. Anschließend wurde eine Menge Kaliumchlorid zugegeben, die wie folgt berechnet wurde: Volumen der Lösung multipliziert mit 13/1000, plus Volumen der Lösung multipliziert mit dem Silbergehalt in ppm (parts per million) multipliziert mit 0,7/1000. Diese Menge an Kaliumchlorid wurde in 5 ml Wasser gelöst, zugegeben und nach zweistündigem Rühren über einen Blauband-Filter mit Aktivkohle filtriert und mit etwa 20 ml Wasser nachgewaschen.

In 50 ml Wasser wurden 14,86 Cyclobutandicarbonsäure gelöst und 14 ml wäßrige Ammoniaklösung einer Konzentration von 25% zugegeben und er pH-Wert auf 6,5 bis 7 eingestellt. Die so erhaltene Lösung wurde zu der vorher erhaltenen Lösung gegeben, in einem Versuch ohne, in einem Versuch mit dem optionalen Reinigungsschritt. Anschließend wurde 16 Stunden gerührt, über einen Blauband-Filter mit Aktivkohle filtriert.

Der Silbergehalt des Filtrats wurde mit ICP-MS (inductively coupled mass spectrometry, also Massenspektrometrie mittels induktiv gekoppelten Plasmas) bestimmt. Anschließend wurde eine Menge Kaliumchlorid zugegeben, die wie folgt berechnet wurde: Volumen der Lösung multipliziert mit 13/1000, plus Volumen der Lösung multipliziert mit dem Silbergehalt in ppm (parts per million) multipliziert mit 0,7/1000. Diese Menge an Kaliumchlorid wurde in 5 ml Wasser gelöst, gemeinsam mit 100 mg Aktivkohle zugegeben und nach etwa einstündigem Rühren für eine weitere Stunde bei abgeschaltetem Rührer stehen gelassen, zuerst über einen Blauband-Filter mit Aktivkohle und anschließend über einen 0,2 µm-Membranfilter filtriert.

Das so erhaltene Filtrat enthielt das Reaktionsprodukt wurde portionsweise im Rotationsverdampfer bei einer Badtemperatur von 37°C im Vakuum auf ein Volumen von 300 ml eingedampft und die auftretenden Niederschläge abfiltriert. Nach Trocknen an der Luft für 24 Stunden wurde das Produkt erhalten.

Der Silbergehalt ohne den optionalen Reinigungsschritt betrug 1,96 ppm, mit Durchführung des optionalen Reinigungsschritts betrug 0,7 ppm.

## Patentansprüche

1. Verfahren zur Herstellung von Carboplatin in pharmazeutischer Qualität, **gekennzeichnet durch** die folgenden Schritte:
a) Bereitstellen einer bestimmten Menge eines cis-diiodo Pt (II)-Komplexes
b) Umsetzen dieses cis-diiodo Pt (II) Komplexes mit einer Lösung einer wässrigen Silbernitratlösung, wobei ein mindestens 5-prozentiger molarer Überschuß von Silbernitrat gegenüber dem cis-diiodo Pt (II) Komplex verwendet wird, und Reaktion bei einer Temperatur von weniger als 100°C unter Rühren, um eine Lösung eines Platin (II)-Aquokomplexes zu erhalten;
c) Zugabe eines Alkali- oder Erdalkalihalogenids zur Fällung überschüssiger Silberionen, ohne zuvor die genaue Menge an überschüssigen Silberionen zu bestimmen;
d) Einfache oder mehrfache Filtration zur Abtrennung von unlöslichen Silberhalogeniden;
e) optional weitere Schritte zum Entfernen von Silber aus der Lösung;
f) Hinzufügen von Cyclobutandicarbonsäure zur wässrigen Lösung des Platin (II)-Aquokomplexes.

2. Verfahren nach Anspruch 1, wobei Schritt e) die Wiederholung der Schritte c) und d), eine Bestimmung des Silbergehaltes und Zugabe einer unter Berücksichtigung des Silbergehaltes berechneten Menge an Alkali- oder Erdalkalihalogenid oder deren Kombinationen umfaßt.

3. Verfahren nach Anspruch 1 oder 2, wobei ein 5- bis 20-prozentiger molarer Überschuß, insbesondere ein ein 9- bis 13-prozentiger molarer Überschuß von Silbernitrat gegenüber dem cis-diiodo Pt (II) Komplex verwendet wird.

4. Verfahren nach einem oder mehreren der Ansprüche 1 bis 3, wobei Schritt a), die Bereitstellung des cis-diiodo Pt (II)-Komplexes, durch Reaktion von K₂PtCl₄ mit Kaliumiodid erfolgt.

5. Verfahren nach einem oder mehreren der Ansprüche 1 bis 4, wobei Schritt f) ein weiterer Schritt zur Entfernung von Silber g) folgt, der ausgewählt ist aus der Wiederholung der Schritte c) und d), einer Bestimmung des Silbergehaltes mit folgender Zugabe einer unter Berücksichtigung des Silbergehaltes berechneten Menge an Alkali- oder Erdalkalihalogenid und deren Kombinationen.

6. Verfahren nach einem oder mehreren der Ansprüche 1 bis 5, wobei Schritt f) oder g) ein weiterer Schritt zur Kristallisation des Endproduktes Carboplatin folgt.

7. Verfahren nach einem oder mehreren der Ansprüche 1 bis 6, wobei zur Fällung überschüssiger Silberionen Natriumchlorid, Kaliumchlorid, Natriumbromid, Kaliumbromid, Natriumiodid, Kaliumiodid oder deren Kombinationen verwendet werden.

8. Verfahren nach einem oder mehreren der Ansprüche 1 bis 6, wobei die Menge in Gramm des in Schritt b) eingesetzten Silbernitrats durch Multiplikation der Menge in g des eingesetzten cis-diiodo Pt (II)-Komplexes mit einem Faktor von 0,55 bis 0,9 erhalten wird.

9. Verfahren nach einem oder mehreren der Ansprüche 1 bis 7, wobei die Menge des in Schritt c) zuzugebenden Alkali- oder Erdalkalihalogenids durch Multiplikation der Menge in g des eingesetzten cis-diiodo Pt (II)-Komplexes mit einem Faktor von 0,03 bis 0,1 erhalten wird.

10. Verfahren nach Ansprüchen 1, 2 und 5, wobei beide Schritte e) und g) eine Bestimmung des Silbergehaltes mit folgender Zugabe einer unter Berücksichtigung des Silbergehaltes berechneten Menge an Alkalimetallhalogenid umfassen.

11. Verfahren zur Herstellung einer sterilen pharmazeutischen Zusammensetzung enthaltend Wasser, Kochsalz, Carboplatin und optionale weitere pharmazeutisch aktive Substanzen, wobei Carboplatin nach einem oder mehreren der Ansprüche 1 bis 10 hergestellt und in Wasser oder einer wäßrigen Lösung enthaltend Kochsalz, weitere pharmazeutisch aktive Substanzen oder deren Kombinationen, aufgelöst wird.

12. Carboplatin in pharmazeutischer Qualität mit einem Silbergehalt von weniger als 2 ppm.

13. Carboplatin nach Anspruch 12, erhältlich nach einem oder mehreren der Ansprüche 1 bis 10.

14. Sterile pharmazeutische Zusammensetzung enthaltend ein Carboplatin nach Anspruch 12 oder 13 oder ein Carboplatin erhältlich nach einem oder mehreren der Ansprüche 1 bis 10.
